# FASCICULE DE BREVET EUROPEEN

(11) **EP 0 433 145 B1**
(45) Date de publication et mention de la délivrance du brevet: **25.05.1994**
(21) Numéro de dépôt: 90403490.7
(22) Date de dépôt: 07.12.1990
(51) Int. Cl.: G02B 27/00, F41G 3/22

(54) **Dispositif optique pour la visualisation de données lumineuses collimatées à l'infini**
Optische Einrichtung zur Darstellung von Sichtdaten im Unendlichen
Optical arrangement for the visualisation of luminous data collimated to infinity

(30) Priorité: 12.12.1989 FR 8916397
(43) Date de publication de la demande: 19.06.1991
(73) Titulaire: SEXTANT AVIONIQUE, F-92360 Meudon-la-Forêt (FR)
(72) Inventeur: Migozzi, Jean-Blaise, F-92045 Paris la Défense (FR); Ediar, Serge, F-92045 Paris la Défense (FR)
(74) Mandataire: Courtellemont, Alain

(56) Documents cités:
- EP-A- 0 273 783
- GB-A- 1 578 136
- GB-A- 2 115 946
- US-A- 4 028 725

## Description

La présente invention concerne les dispositifs optiques pour la visualisation de données lumineuses collimatées à l'infini, ces données venant généralement, mais pas obligatoirement, en surimpression de la vision du paysage extérieur. De tels dispositifs, qui équipent les aéronefs, peuvent être montés soit sur une planche de bord en position tête haute, soit sur un casque de pilotage. Ils servent principalement pour l'aide à la navigation et les viseurs de tir.

Les besoins en données lumineuses vont en croissant dans les aéronefs, et les images produites doivent avoir des champs de plus en plus importants avec une qualité optique qui doit rester suffisante dans tout le champ, quelle que soit la position d'observation des yeux.

Ceci a conduit peu à peu à des dispositifs optiques comportant de nombreuses lentilles, au moins six, donc à des volumes et à des poids importants, qui rendent difficiles le montage de ces dispositifs dans les casques de pilotes.

Le but de l'invention est de réduire le nombre de ces lentilles pour un champ encore plus grand et une résolution de l'image aussi bonne.

La présente invention a pour objet un dispositif optique, tel que défini par la revendication 1, qui forme la pupille de sortie (exit pupil dans la littérature anglo-saxonne) en permanence sur la pupille de l'oeil et qui la réduit jusqu'à une dimension bien inférieure à celle de la pupille de l'oeil.

D'autres objets et d'autres caractéristiques apparaîtront à l'aide de la description ci-après et des figures s'y rapportant qui représentent:
- la figure 1, le schéma simplifié d'un dispositif optique selon l'art antérieur,
- la figure 2, le schéma simplifié d'un dispositif optique selon l'invention,
- les figures 3 et 4, des vues détaillées de dispositifs optiques selon l'invention,
- la figure 5, le schéma d'un montage électronique destiné aux dispositifs optiques selon les figures 3 et 4.

Sur les différentes figures les éléments correspondants sont désignés par les mêmes références.

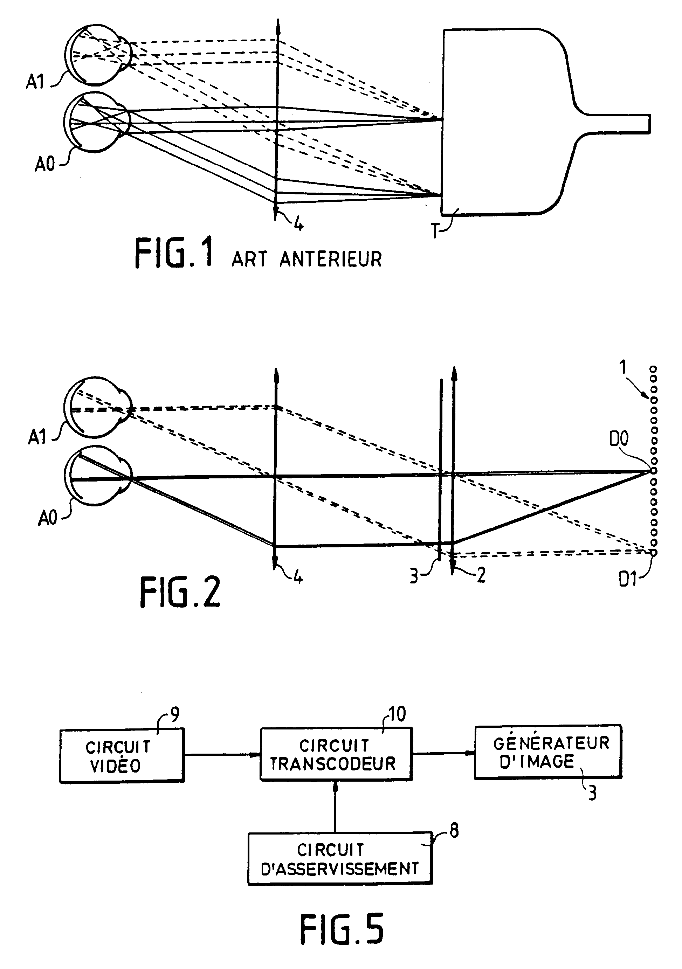

La figure 1 montre un tube cathodique, T, qui émet des rayons dans toutes les directions et éclaire ainsi une optique de collimation 4, laquelle rend ces rayons à peu près parallèles entre eux; l'image du tube fournie par l'optique est dite collimatée à l'infini. En fait les rayons, à la sortie de l'optique 4, ne sont pas tout à fait parallèles. Le défaut de parallélisme, ou défaut de parallaxe, peut provenir d'une mauvaise mise au point du tube au foyer de l'optique, des aberrations résiduelles n'ayant pu être corrigées lors du calcul d'optimisation de cette optique (aberration sphérique, coma, astigmatisme, courbure de champ), des défauts d'usinage ou de montage (excentrements, inclinaisons).

Pour une position de l'oeil dans le faisceau de sortie de l'optique, la pupille reçoit des rayons provenant de divers points du tube. La formation sur la rétine des rayons correspondant à un même point du tube ne crée pas un point mais une tache d'autant plus grande que les défauts précédents sont importants. L'image vue est donc plus ou moins nette; cette image ne peut être améliorée qu'en ajoutant des lentilles à l'optique.

En limitant fortement la section d'un faisceau lumineux, qui transmet une image et pénètre dans la pupille de l'oeil, le nombre de rayons aberrants est réduit; et, quand la tache d'impact de ce faisceau sur la rétine devient ponctuelle, une meilleure résolution de l'image est obtenue, même lorsque le dispositif optique qui a servi à transmettre l'image ne comporte qu'un ou deux éléments optiques.

Le diamètre de la pupille de sortie d'un dispositif optique ne peut être réduit indéfiniment à cause de la diffraction qui va affecter la qualité de l'image. Un bon compromis existe pour un diamètre de quelques dixièmes de millimètre. En laissant passer les rayons par un trou de cette dimension, les aberrations de l'optique deviennent négligeables et la diffraction bien que visible sur de très petits points ne l'est pas sur les dessins qui sont utilisés dans les viseurs et qui ont une épaisseur de traits voisine ou supérieur au milliradian. Or la pupille de l'oeil a un diamètre qui varie naturellement entre 2 et 8 mm en fonction de l'environnement lumineux.

La figure 2 est une vue schématique, en coupe transversale, d'un dispositif optique de visualisation selon l'invention, avec un oeil, représenté dans deux positions différentes, AO et A1, dans une zone où il est prévu que se fasse la visualisation.

Le dispositif comporte, en série, une matrice plane de diodes électroluminescentes, qui constitue une source de lumière 1, un condenseur optique 2, un générateur d'image 3 et une optique de collimation 4.

La lumière fournie par une source est considérée comme cohérente lorsque la source émet dans un cône d'angle inférieur ou égal au cône de diffraction. Pour que le générateur d'image 3 soit éclairé en lumière cohérente, il faut que chaque point de ce générateur soit éclairé par un faisceau très fin; les faisceaux très fins, pour éclairer le générateur d'image 3, s'obtiennent par la formation sur la pupille de l'oeil de l'image d'une diode de la matrice, c'est-à-dire que, en fonction de la position de l'oeil, ce sera celle des diodes de la source 1 dont l'image se formera sur la pupille de l'oeil, qui éclairera; ainsi, dans la position AO c'est la diode DO qui éclaire tandis que dans la position A1 c'est la diode D1 qui éclaire. Ainsi la tache d'aberration sur la rétine de l'oeil est très réduite, si bien que l'image vue par l'oeil de l'image fournie par le générateur et collimatée à l'infini, est nette même si l'optique 4 est aberrante. Une bonne profondeur de champ est obtenue et il est possible de déplacer l'optique de collimation par rapport au générateur d'image 3 afin de modifier le grandissement de l'image sans, pour cela, perturber la netteté de l'image vue.

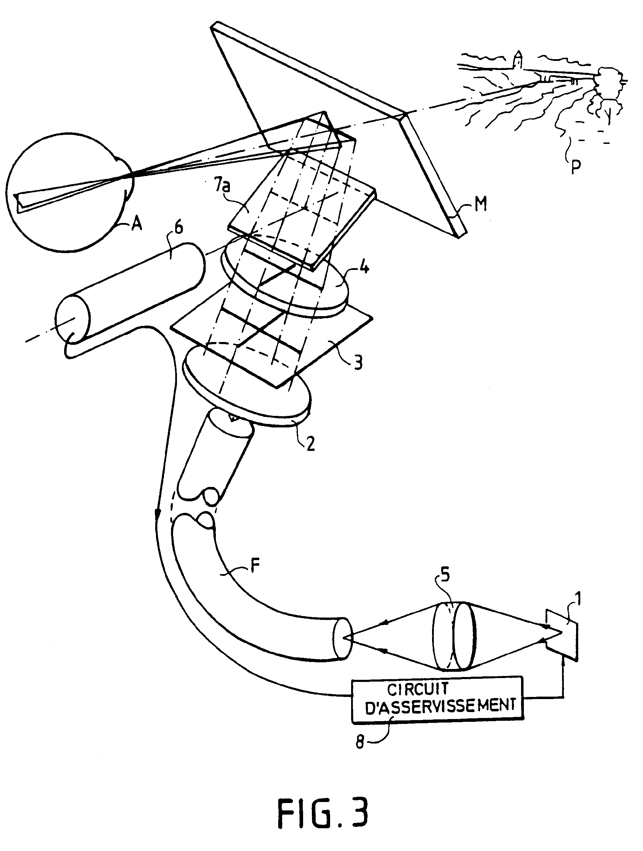

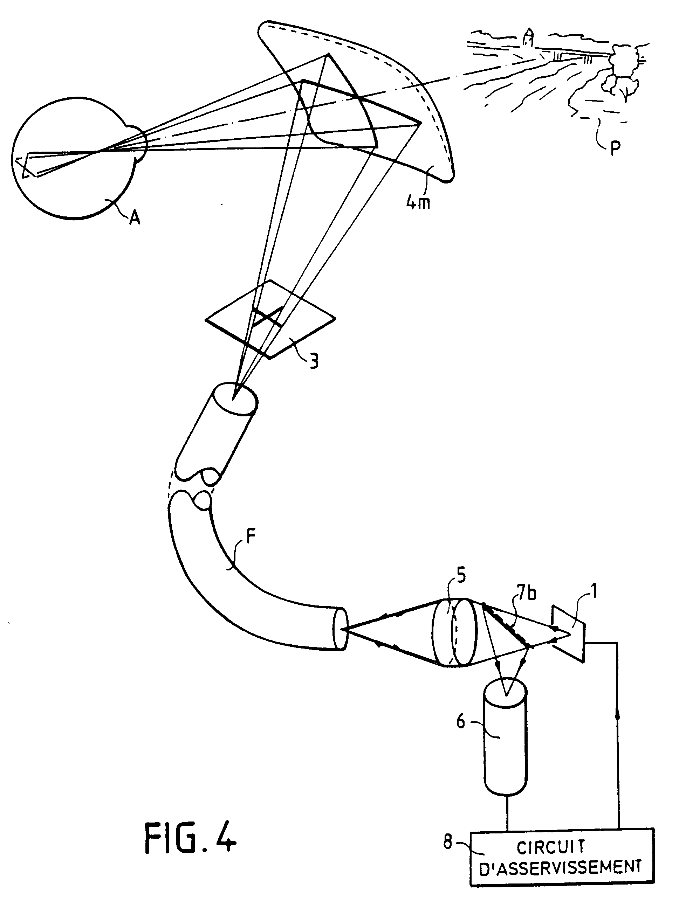

Dans le dispositif optique selon la figure 2 il a été dit que la source de lumière 1 était une matrice de diodes électroluminescentes; les réalisations qui vont être décrites à l'aide des figures 3 et 4 comportent également, chacune, une source de ce type, mais d'autres types de sources peuvent être employés. Ainsi la source pourra, par exemple, être constituée par une simple diode électroluminescente, par une lampe à filament incandescent, par un laser... ; dans ces trois cas la source sera déplacée ou sa lumière sera déviée en fonction des déplacements de l'oeil afin que son image se forme en permanence sur la pupille de l'oeil. De plus, et particulièrement dans le cas des diodes électroluminescentes et des lampes à filament incandescent, une réduction optique pourra être nécessaire pour fournir un faisceau suffisamment fin. Il est également possible de combiner le générateur d'image et la source ponctuelle en projetant directement l'image sur la rétine de l'oeil par un balayage d'un faisceau directif, du genre balayage de télévision, émis par exemple par un laser.

Il est à remarquer que la réalisation d'un faisceau lumineux quasi-ponctuel nécessite qu'entre la source de lumière et l'oeil il n'y ait aucun élément diffusant. C'est pourquoi, dans les exemples de réalisation décrits à l'aide des figures 3 et 4, le générateur d'image est constitué par un panneau à cristal liquide non diffusant, placé entre deux polariseurs; mais d'autres possibilités s'offrent pour réaliser le générateur d'image, en particulier celle qui a été mentionnée ci-avant et qui regroupe, à l'aide d'un laser, la source de lumière et le générateur; il est également possible d'utiliser, comme générateur d'image, une valve matricielle, du type à cristal liquide uniaxe et polaire, avec ses deux polariseurs placés de part et d'autre.

Dans ce qui précède il a été dit que le faisceau lumineux devait suivre les déplacements de l'oeil. Pour connaître ces déplacements un oculomètre sera employé dans les réalisations selon les figures 3 et 4; il s'agit d'un appareil qui observe l'oeil et, par analyse de l'image observée, fournit les coordonnées du centre de l'iris; un tel appareil est, par exemple, décrit dans le brevet français 2 522 804 déposé le 5 mars 1982. Un dispositif selon le préambule de la revendication 1 est par ailleurs décrit dans la demande de brevet GB-A-1578136.

La figure 3 est un schéma qui montre un dispositif optique selon l'invention, représenté plus en détail que celui de la figure 2.

La figure 3 montre une source de lumière, 1, constituée par une matrice de diodes électroluminescentes. Une optique de projection, 5, formée de lentilles, donne une image des diodes sur l'entrée d'un faisceau de fibres optiques F dont la sortie est placée sur un casque, non représenté, de pilote d'aéronef. Un condenseur 2 transforme le faisceau lumineux, qui émerge de la sortie des fibres F, en un faisceau de rayons parallèles qui traverse un générateur d'image 3 constitué par un panneau à cristal liquide placé entre deux polariseurs, ce générateur est représenté alors qu'il génère, comme image, une croix; les circuits et les connexions associés au panneau pour générer des images n'ont pas été dessinés sur la figure 3. Le faisceau est ensuite focalisé par une optique de collimation 4 sur la pupille de l'oeil, A, d'un observateur après avoir traversé une glace séparatrice 7a et s'être réfléchi sur un miroir mélangeur M; la glace séparatrice et le miroir mélangeur M sont des miroirs semi-transparents qui permettent respectivement
- à l'oeil, A, de l'observateur de regarder le paysage placé devant lui, à travers le miroir mélangeur M,
- à un oculomètre, 6, de surveiller les mouvements de l'oeil A, la surveillance se faisant par un trajet optique incluant une réflexion sur chacun des deux miroirs semi-transparents M et 7a.

L'oculomètre 6, est porté par le casque de l'observateur, c'est-à-dire qu'il est solidaire des éléments optiques qui vont de la sortie des fibres F au miroir mélangeur M compris; il détermine la position de l'oeil par les coordonnées du centre de la pupille de l'oeil par rapport à ces éléments optiques et envoie cette information de position, sous forme d'un signal électrique, à un circuit d'asservissement 8. Le circuit 8 comporte une mémoire dans laquelle sont stockées les adresses des diodes électroluminescentes de la source 1 à allumer, en fonction de la position de l'oeil; une diode est allumée lorsque son image, c'est-à-dire la pupille de sortie du dispositif, se trouve au centre de la pupille de l'oeil où elle constitue une zone éclairée. En réalité, dans l'exemple décrit, ce sont neuf diodes qui sont allumées simultanément et ces neuf diodes sont disposées en un carré de trois sur trois. Toujours dans l'exemple décrit, la zone éclairée de la pupille de l'oeil a un diamètre de 0, 6 mm et les déplacements de cette zone se font par pas de 0, 2 mm pour suivre des déplacements de l'oeil de 2,6 mm de part et d'autre d'un point central; ces déplacements de l'oeil correspondent à une visualisation dont le champ est de 30 degrés.

Le circuit d'asservissement 8 faisant correspondre, à chaque point de l'image élaborée par le générateur d'image 3, un faisceau étroit qui aboutit sensiblement au centre de la pupille de l'oeil A, l'image vue par l'oeil est nette. Mais, à cause des défauts des différents éléments optiques et, en particulier, de l'optique de collimation, 3, cette image peut subir des distorsions. Or ces distorsions sont fonction du trajet optique qu'empruntent les rayons du faisceau, c'est-à-dire de la position des diodes qui sont allumées. Comme il est connu de déterminer, pour chaque trajet, dans un système optique, la distorsion qu'amène le système dans l'image, il est possible de corriger cette distorsion en produisant l'effet inverse dans le générateur d'image 3; ainsi, par exemple, lorsqu'un carré dans le générateur d'image est vu comme un coussin, une correction en forme de tonneau au niveau du générateur permet à l'oeil de voir un carré. Chaque fois que l'oeil bouge la correction à apporter au générateur d'image 3 doit être adaptée à la position des diodes qui sont allumées dans la source de lumière 1; ceci est réalisé à l'aide du montage selon la figure 5. Lorsque cette correction n'existe pas, le générateur d'image 3 reçoit directement ses signaux d'entrée d'un circuit vidéo, 9. La figure 5 montre que la correction s'effectue en interposant entre le circuit vidéo 9 et le générateur d'image 3, un circuit transcodeur 10 qui reçoit du circuit d'asservissement 8 les coordonnées des diodes allumées et en fonction de ces coordonnées corrige les coordonnées théoriques des points d'image fournies par le circuit vidéo; le circuit transcodeur est donc un circuit pour commande d'effets spéciaux du type de ceux utilisés en télévision.

La figure 4 est un autre exemple de réalisation montrant un dispositif optique selon l'invention. Cette réalisation se distingue de celle selon la figure 3 en ce que l'oculomètre 6 n'est plus porté par le casque de l'observateur mais est solidaire des éléments optiques qui vont de la source de lumière 1 incluse à l'entrée des fibres optiques F; elle s'en distingue également en ce que, entre le générateur d'image 3 et l'oeil A de l'observateur, c'est la visière du casque constituée par un miroir semi-transparent concave, 4m, à travers lequel l'oeil, A, observe le paysage, P, qui joue à la fois le rôle d'optique de collimation et de miroir mélangeur. Dans cette réalisation la pupille de l'oeil est observée, par l'oculomètre 6, à l'aide d'une glace séparatrice 7b constituée par un miroir semi-transparent disposé sur le chemin optique entre optique de projection 5 et la source de lumière 1; quant au condenseur 2 de la figure 3 il est supprimé de manière à alléger au maximum le casque de l'observateur sur lequel ne sont plus montés que le générateur d'image et une extrémité des fibres optiques F. Cette suppression est possible parce que, dans l'exemple selon la figure 4, la surface utile du générateur d'image 3 est bien plus petite (plus de deux fois) que celle de l'optique de collimation 4m. Mais, à générateurs d'image identiques, la résolution de l'image vue par l'oeil est nettement inférieure à celle obtenue dans le cas de la figure 3.

Le dispositif optique selon la figure 4 a été équipé, dans l'une de ses versions, du montage électronique selon la figure 5 pour corriger les distorsions amenées, dans l'image vue par l'oeil, par l'optique de collimation que constitue le miroir 4m.

La présente invention n'est pas limitée aux exemples décrits, c'est ainsi qu'elle concerne, en particulier, des dispositifs optiques où la source de lumière 1 ne transmettrait pas sa lumière au générateur d'image 3 par un trajet incluant un conducteur optique souple mais par un trajet dont tous les éléments seraient mécaniquement solidaires entre eux; inversement il peut être envisagé de réaliser un dispositif optique selon l'invention équipé d'un conducteur optique souple disposé entre le générateur d'image et l'oeil.

L'invention s'applique également au cas où l'image à obtenir doit être en polychromie, la couleur étant obtenue, par exemple, par la fusion sur la rétine de l'oeil de trois images générées l'une en rouge, l'autre en vert, l'autre en bleu. Quelle que soit la façon de générer ces trois images et de réaliser la fusion sur la rétine de l'oeil, il y a la possibilité de compenser les défauts chromatiques hors axe des éléments optiques disposés sur le trajet de chacune des images; pour cela chaque image peut être traitée séparément par un montage du genre de celui décrit à l'aide de la figure 5.

L'invention s'applique également à des dispositifs destinés à la visualisation de données collimatées à l'infini sans qu'il soit possible d'observer simultanément un paysage ou une quelconque autre vue. Elle s'applique aussi à la visualisation binoculaire, les dispositifs relatifs aux deux yeux pouvant, grâce à des miroirs semi-transparents, comporter des parties communes mais un oculomètre et un circuit d'asservissement distincts pour chaque oeil.

## Revendications

1. Dispositif optique pour la visualisation de données lumineuses collimatées à l'infini comportant des moyens de visualisation (1-5, F, M; 1, 3, 5, F, 4m) incluant un générateur d'image (3) suivi d'une optique de collimation (4; 4m) pour fournir à un oeil humain une image collimatée à l'infini à partir de l'image fournie par le générateur et un oculomètre (6) pour fournir un signal de position, représentatif des coordonnées du centre de la pupille de l'oeil, caractérisé en ce que les moyens de visualisation ont une pupille de sortie d'un diamètre inférieur à la pupille de l'oeil et dont la position est réglable et en ce qu'ils comportent un circuit d'asservissement (8) pour recevoir le signal de position et effectuer une commande des moyens de visualisation afin que la pupille de sortie soit centrée sur la pupille de l'oeil.

2. Dispositif optique selon la revendication 1, caractérisé en ce que les moyens de visualisation comportent une matrice de diodes électroluminescentes et un système optique (5, F, 2, 4, M; 5, F, 4m) pour former une image des diodes de la matrice dans une zone où s'effectue la visualisation par l'oeil et en ce que la commande effectuée par le circuit d'asservissement consiste à autoriser l'allumage d'au moins une diode de la matrice dont l'image donnée par le système optique est sensiblement au voisinage du centre de la pupille de l'oeil.

3. Dispositif optique selon la revendication 1, dans lequel l'optique de collimation (4; 4m) produit des distorsions, comportant un circuit transcodeur (10) pour modifier les caractéristiques du générateur d'image (3), en fonction du signal de position, afin que l'image produite par le générateur d'image présente des distorsions inverses de celles produites par l'optique de collimation (4).

4. Dispositif optique selon l'une des revendications précédentes, dans lequel les moyens de visualisation sont portés, au moins partiellement par un casque, l'oculomètre (6) étant porté par le casque.

5. Dispositif optique selon l'une des revendications 1 à 3, dans lequel les moyens de visualisation comportent une première partie (3, 4m) solidaire d'un casque et une seconde partie (1, 5) couplée optiquement au casque par un faisceau de fibres optiques souples (F), l'oculomètre (6) étant solidaire de la seconde partie et conçu pour observer l'oeil (A) par un trajet optique incluant les fibres optiques.

## Patentansprüche

1. Optische Vorrichtung für die Sichtbarmachung von im Unendlichen kollimatierten Leuchtdaten, mit Sichtbarmachungsmitteln (1 bis 5, F, M; 1, 3, 5, F, 4m), zu denen ein Bildgenerator (3) gefolgt von einer Kollimationsoptik (4; 4m), um dem menschlichen Auge ein ins Unendliche kollimatiertes Bild ausgehend von dem vom Bildgenerator erzeugten Bild zu liefern, und ein Augenmeßgerät (6) gehören, um ein Lagesignal zu liefern, das für die Koordinaten des Zentrums der Pupille des Auges repräsentativ ist, dadurch gekennzeichnet, daß die Mittel zur Sichtbarmachung eine Ausgangspupille mit einem Durchmesser besitzen, der kleiner als die Pupille des Auges ist und dessen Lage regelbar ist, und daß die Mittel einen Regelkreis (8) besitzen, der das Lagesignal empfängt und eine Steuerung der Sichtbarmachungsmittel durchführt, derart, daß die Ausgangspupille auf die Pupille des Auges zentriert wird.

2. Optische Vorrichtung nach Anspruch 1, dadurch gekennzeichnet, daß die Sichtbarmachungsmittel eine Matrix von Elektrolumineszenzdioden und ein optisches System (5, F, 2, 4, M; 5, F, 4m) besitzen, um ein Bild der Dioden der Matrix in einer Zone zu erzeugen, in der die Sichtbarmachung durch das Auge erfolgt, und daß die vom Regelkreis durchgeführte Steuerung darin besteht, mindestens eine Diode der Matrix aufleuchten zu lassen, deren vom optischen System erzeugtes Bild praktisch in der Nähe des Zentrums der Pupille des Auges liegt.

3. Optische Vorrichtung nach Anspruch 1, in der die Kollimationsoptik (4; 4m) Verzerrungen erzeugt, mit einem Transkodierer (10), um die Kennwerte des Bildgenerators (3) abhängig vom Lagesignal zu verändern, damit das vom Generator erzeugte Bild Verzerrungen aufweist, die denen entgegengesetzt sind, die von der Kollimationsoptik (4) erzeugt werden.

4. Optische Vorrichtung nach einem der vorhergehenden Ansprüche, in der die Mittel zur Sichtbarmachung zumindest teilweise auf einem Helm angeordnet sind, wobei das Augenmeßgerät (6) auch auf dem Helm angeordnet ist.

5. Optische Vorrichtung nach einem der Ansprüche 1 bis 3, in der die Mittel zur Sichtbarmachung einen ersten Teil (3, 4m) auf dem Helm und einen zweiten Teil (1, 5) besitzen, der optisch mit dem Helm über ein Bündel von elastischen Lichtleitfasern (F) gekoppelt ist, wobei das Augenmeßgerät (6) mit dem zweiten Teil fest verbunden ist und so ausgebildet ist, daß es das Auge (A) über einen die Lichtleitfasern einschließenden optischen Pfad beobachtet.

## Claims

1. Optical device for the visual display of luminous data collimated at infinity, including visual display means (1-5, F, M; 1, 3, 5, F, 4m) including an image generator (3) followed by an optical collimating system (4; 4m) for supplying to a human eye an image collimated at infinity from the image supplied by the generator, and an oculometer (6) for supplying a position signal, representative of the coordinates of the centre of the pupil of the eye, characterized in that the visual display means have an exit pupil having a diameter less than the pupil of the eye and the position of which can be set, and in that they include a slaving circuit (8) for receiving the position signal and for exerting control of the visual display means so that the exit pupil is centred on the pupil of the eye.

2. Optical device according to Claim 1, characterized in that the visual display means include a matrix of light-emitting diodes and an optical system (5, F, 2, 4, M; 5, F, 4m) for forming an image of the diodes of the matrix within a region in which the viewing by the eye takes place, and in that the control exerted by the slaving circuit consists in permitting the lighting of at least one diode of the matrix, the image of which given by the optical system is substantially in the vicinity of the centre of the pupil of the eye.

3. Optical device according to Claim 1, in which the optical collimating system (4; 4m) produces distortions, including a code converter circuit (10) for modifying the characteristics of the image generator (3), as a function of the position signal, so that the image produced by the image generator exhibits distortions which are the reverse of those produced by the optical collimating system (4).

4. Optical device according to one of the preceding claims, in which the visual display means are carried at least partially by a helmet, the oculometer (6) being carried by the helmet.

5. Optical device according to one of Claims 1 to 3, in which the visual display means include a first part (3, 4m) integral with a helmet and a second part (1, 5) optically coupled to the helmet by a bundle of flexible optical fibres (F), the oculometer (6) being integral with the second part and designed to observe the eye (A) via an optical path including the optical fibres.
